# EUROPEAN PATENT SPECIFICATION

(11) **EP 4 308 823 B1**
(45) Date of publication and mention of the grant of the patent: **01.01.2025**
(21) Application number: 22710702.6
(22) Date of filing: 04.03.2022
(51) Int. Cl.: F16C 33/74, F16C 19/52, F16C 19/06, F16C 27/06, F16C 27/04, F16C 35/077

(54) **ROTOR BEARING DAMPER FOR A VACUUM PUMP**
ROTORLAGERDÄMPFER FÜR EINE VAKUUMPUMPE
AMORTISSEUR DE PALIER DE ROTOR POUR POMPE À VIDE

(30) Priority: 15.03.2021 GB 202103570
(43) Date of publication of application: 24.01.2024
(73) Proprietor: Edwards Limited, Burgess Hill, Sussex RH15 9TW (GB)
(72) Inventor: LAMB, Peter Charles, Burgess Hill Sussex RH15 9TW (GB); SMITH, Paul David, Burgess Hill Sussex RH15 9TW (GB)
(74) Representative: Totman, Clare Elizabeth
(86) International application number: PCT/GB2022/050575
(87) International publication number: WO 2022/195251

(56) References cited:
- EP-A1- 2 088 327
- EP-A1- 2 088 327
- GB-A- 1 331 166
- GB-A- 1 331 166
- GB-A- 2 481 839
- GB-A- 2 481 839
- JP-A- 2005 240 978
- US-A- 2 314 622
- US-A1- 2008 025 655

## Description

### Field

The present invention relates to dampers for vacuum pumps and, in particular, to dampers and damping arrangements for turbomolecular pumps. The present invention also relates to methods of designing and manufacturing dampers.

### Background

Vacuum pumps, as for example known from the document EP 2 088 327 A1, typically comprise an impeller in the form of a rotor mounted on a shaft for rotation relative to a surrounding stator. In a turbomolecular pump, for example, sets of moving rotor blades are located on a shaft and are separated and moveable between stationary blades, in use, to compress gas and typically deliver it to an outlet pump, e.g. a rotary pump.

A shaft is supported by two bearing arrangements located at or intermediate respective ends of the shaft. One or both of these bearing arrangements may be a mechanical bearing in the form of rolling bearings. For instance, the upper bearing may be in the form of a magnetic bearing, and the lower bearing is in the form of a rolling bearing. In other examples, both an upper bearing and lower bearing of a vacuum pump may be in the form of a rolling bearing.

Rotational speeds of vacuum pump shafts, and turbomolecular pumps in particular (which may comprise rotors typically rotating at speeds of between 50,000 rev min⁻¹ to 100,000 rev min⁻¹), pose significant potential problems with vibration generated through shaft rotation. Both the operation of a vacuum pump and of the systems and instrumentation utilising the pump may be compromised by vibrations which are not effectively dampened and which are transmitted into static parts of the vacuum pump and beyond.

Axial and radial damping is required around mechanical bearings used in turbomolecular pumps to suppress the transmitted vibration from the rotating assembly into the static structure. Typical applications for turbomolecular pumps require low vibration so that the instrumentation in the vacuum space, or close to it, is not compromised.

Polymer and metallic components are typically used to provide damping where non-magnetic bearing systems are utilised. Clearances in the pump mechanism dictate the permitted limits of movement in both radial and axial directions. Known damping arrangements are typically arranged to dampen vibrations at frequencies in the region of from around 100 Hz to around 10 kHz (10,000 Hz), and sometimes up to around 20 kHz (20,000 Hz).

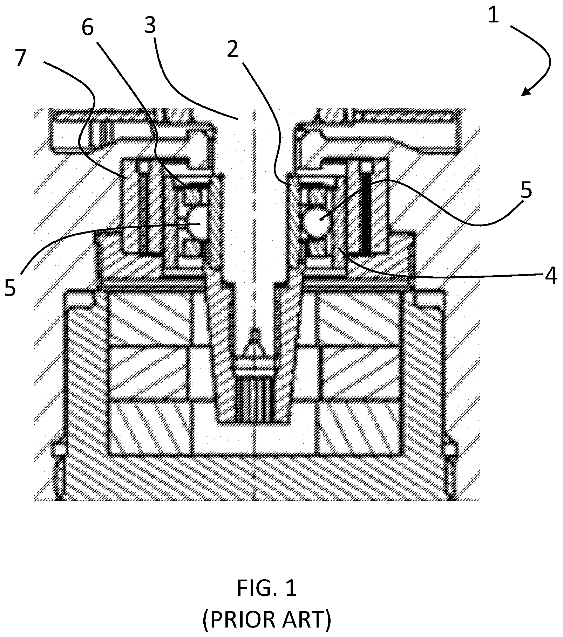

As illustrated in Figure 1, which shows part of a vacuum pump forming part of the state of the art, a typical rolling bearing 1 comprises an inner race 2 fixed relative to shaft 3 of the pump, an outer race 4, and a plurality of rolling elements 5, supported by a cage 6, for allowing relative rotation of the inner race 2 and the outer race 4. The rolling bearing 1 is lubricated to establish a load-carrying film separating the bearing components in rolling and sliding contact in order to minimize friction and wear. A resilient bearing support 7, in the form of a compact metal spring damper (CMSD), may be provided (as in Figure 1) to dampen or suppress vibrations generated by the rotation of the shaft 3 within the fixed structure of the pump. A CMSD is typically axially less flexible and radially more flexible. In other words, a CMSD typically allows a level of sideways movement of a shaft, i.e. substantially perpendicular to its rotational axis, and substantially constrains longitudinal movement of the shaft, during use. This is because axial movement of a shaft can be particularly damaging bearing in mind the minimal clearances between moving and stationary blades of a turbomolecular pump. A lock ring 8 maintains the bearing arrangement, including the resilient bearing support 7, in place.

However, achieving sufficient damping within the limits of material properties and space within a vacuum pump is challenging, and improved isolation between the shaft and fixed structure of a pump is required to dampen higher frequency vibrations as present and potential future uses are increasingly sensitive.

High frequency vibrations are well-known to transmit well through various materials and so can easily interfere with nearby instrumentation. For example, mass spectrometer systems are ever-increasing in their sensitivity and mechanical vibrations above those currently targeted and described above, for example in the region of from around 40 kHz to around 110 kHz, and above, are known to influence mass spectrometry instrumentation.

Suppression of vibrations in these higher frequency regions, and at various amplitudes and resonances are already needed or will be required in the near future.

The present invention aims to solve these and other problems with the prior art.

### Summary

Accordingly, in a first aspect, the present invention provides a rotor bearing damper for a vacuum pump comprising a housing and a rotor shaft having a rotational axis and being supported by a rotor bearing, the rotor bearing damper comprising: an inner fixture configured to couple to the rotor bearing, an outer fixture arranged radially outward of the inner fixture and configured to couple to the housing, and a flexure extending radially outwardly from the inner fixture to the outer fixture; wherein the flexure is relatively less flexible in a radial plane and relatively more flexible in a direction substantially perpendicular to said radial plane.

Thus, the rotor bearing damper is relatively axially flexible and relatively radially stiff. In other words, the damper is configured such that it is relatively more flexible in a direction substantially parallel to a rotational axis of the rotor shaft of a vacuum pump and relatively less flexible in a plane substantially perpendicular to the rotational axis. The rotor bearing damper is therefore arranged to improve damping of radially transmitted vibrations, in use and to simultaneously be relatively axially compliant.

Therefore, a vacuum pump comprising the rotor bearing damper is arranged to provide improved suppression of, in particular, high frequency vibrations which may otherwise be transmitted from the rotating assembly of a vacuum pump, e.g. the shaft of a turbomolecular pump, into the static structure of the vacuum pump and/or neighbouring systems. Thus, instrumentation in the vacuum space created by the vacuum pump, or close to it, is not compromised.

As used herein, the term "damper" ("damping") refers to a device primarily configured to minimise or significantly reduce transmission of vibrations generated by rotating components of a vacuum pump to a neighbouring static structure.

Advantageously, the rotor bearing damper is configured with a reduced dynamic stiffness to provide vibration isolation between the rotating component and the static structure of a vacuum pump.

In embodiments, the rotor bearing damper may include means to dissipate or absorb the energy associated with the displacement of the rotor bearing damper due by mechanical vibrations.

As used herein, the term "damper" is not intended to refer to devices primarily configured for the management, including compensation or regulation, of other forces, such as thermal expansion of pump components during use.

As used herein, the terms "couple" ("coupled") refers to the joining of the inner and outer fixtures with the rotor bearing and housing, respectively, either by direct (i.e. touching) engagement, indirect engagement (via an intermediate member), releasable attachment, semi-permanent, and/or permanent, i.e. non-releasable, binding. In embodiments, the inner and outer fixtures may be configured to couple to the rotor bearing and housing, respectively, by direct engagement. In embodiments, the inner and outer fixtures may be configured to couple to the rotor bearing and housing, respectively, by a push fit engagement.

In embodiments, the inner fixture and outer fixture may occupy substantially the same radial plane as one another and the flexure extends radially outwardly therebetween. Typically, said radial plane is substantially perpendicular to the rotational axis of the rotor shaft of the vacuum pump to which the rotor bearing damper is coupled.

In embodiments, the inner fixture and outer fixture may be substantially axially offset such that they occupy substantially different (e.g. parallel) radial planes to one another and the flexure extends radially outwardly therebetween. In other words, the flexure may extend radially outwardly substantially perpendicularly to the rotational axis of the rotor shaft of the vacuum pump in which the rotor bearing damper is located, or the flexure may extend radially outwardly but not substantially perpendicularly to the rotational axis, e.g. at an angle thereto. Thus the flexure may form a part of an imaginary cone.

In embodiments, the inner fixture and outer fixture may occupy the substantially the same radial plane as one another in a vacuum pump and the flexure may be configured such that the inner and outer fixtures are permitted to move axially relative to one another by a distance of up to around 0.25mm.

In embodiments, the inner fixture and outer fixture may occupy substantially different radial planes as one another in a vacuum pump and the flexure may be configured such that the inner and outer fixtures are permitted to move axially relative to one another by a distance of up to around 0.25mm.

In embodiments, the inner and outer fixture may be permitted to move radially relative to one another by a distance of up to around 0.25mm, and preferably by a distance less than the permitted relative axial movement thereof.

In embodiments, the rotor bearing damper may be formed as a substantially flat annulus.

In embodiments, the flexure may have a non-linear configuration. In embodiments, the flexure may be curved. In embodiments, the rotor bearing damper may be formed substantially as a frustoconical member.

In embodiments, the rotor bearing damper may comprise a plurality of flexures.

In embodiments, in use, the outer fixture is substantially fixedly attached to the housing and the inner fixture is moveable relative thereto.

In embodiment, the inner fixture may be configured to be coupled directly to an outer race of the rotor bearing.

According to the invention, the inner fixture is configured to be coupled to a resilient bearing support of a bearing arrangement. For example, the inner fixture may be configured to couple to a compact metal spring damper (CMSD) of a bearing arrangement, the CMSD comprising an inner portion coupled to the bearing and an outer portion, wherein the inner and outer portions are connected by at least one resiliently flexible member, wherein the resilient bearing support is coupled to the housing of a vacuum pump by the rotor bearing damper.

Therefore, in combination with a bearing support, the rotor bearing damper is configured to more effectively dampen vibrations of different frequencies and amplitudes. For example, a CMSD is radially more flexible and axially less flexible. Whilst vacuum pumps of the prior art are arranged to substantially prevent radial flexibility, the combined use of a CMSD and the damper of the invention provides a vacuum pump in which both axial and radial damping characteristics may be configured, in particular within a turbomolecular pump, to improve damping.

In embodiments, the rotor bearing damper is arranged to be located within a turbomolecular pump.

In a further aspect, the present invention provides a vacuum pump including a pump housing and a pump mechanism located within said pump housing, the pump mechanism comprising, a rotor shaft which is rotatable about a rotational axis thereof, and at least one bearing arrangement comprising a rolling element bearing coupled to the rotor shaft; wherein the bearing arrangement is coupled to the housing by a radially outwardly extending rotor bearing damper according to claim 1.

Therefore, the vacuum pump comprises a rotor bearing damper arranged to provide improved suppression of, in particular, high frequency vibrations which may otherwise be transmitted from the rotating assembly of a vacuum pump, e.g. the rotor shaft of a turbomolecular pump, into the static structure of the vacuum pump and/or neighbouring systems. Thus, instrumentation in the vacuum space created by the vacuum pump, or close to it, are not compromised. More specifically, the rotor bearing damper is arranged such that it is axially relatively more flexible and radially relatively less flexible.

In embodiments, the rotor bearing damper may be configured to dissipate one or more vibration frequencies that may be transmitted from the rotating assembly of the vacuum pump, the one or more vibration frequencies being at a frequency of 10kHz or greater.

In embodiments, the rotor bearing damper may be configured to dissipate one or more vibration frequencies at a frequency in the range of from around 10 kHz to around 110 kHz, preferably from around 20 kHz to around 110 kHz, more preferably from around 40 kHz to around 110 kHz, still more preferably from around 75 kHz to around 110 kHz.

In embodiments, the rotor bearing damper may be arranged to dissipate one or more vibration frequencies at a frequency of around 110 kHz or greater.

Thus, transmission of vibrations at these frequencies will not transmit beyond the rotor bearing damper, or transmission will at least be dissipated to a permissible level.

In embodiments, the bearing arrangement may comprise a resilient bearing support comprising an inner portion coupled to the bearing and an outer portion, wherein the inner and outer portions are connected by at least one resiliently flexible member, and wherein the bearing support is coupled to the housing by the radially outwardly extending rotor bearing damper. In embodiments, the bearing support may comprise a compact metal spring damper (CMSD).

In embodiments, the radially outwardly extending rotor bearing damper may comprise an inner fixture coupled to the bearing arrangement, an outer fixture coupled to the pump housing, and a flexure extending radially outwardly from the inner fixture to the outer fixture; wherein the outer fixture is substantially fixedly attached to the housing and the inner fixture is moveable relative thereto.

In a further aspect, the present invention provides a vacuum pump including a pump housing and a pump mechanism located within said housing, the pump mechanism comprising a rotor shaft and at least one bearing arrangement, wherein the at least one bearing arrangement comprises a bearing coupled to the rotor shaft and a resilient bearing support, the resilient bearing support comprising an inner portion coupled to the bearing and an outer portion coupled to the pump housing, wherein the inner and outer portions are connected by at least one resiliently flexible member, and wherein the outer member of the resilient bearing support is coupled to the pump housing by a radially outwardly extending rotor bearing damper.

Therefore, the vacuum pump comprises a rotor bearing damper arranged to provide improved suppression of, in particular, high frequency vibrations which may otherwise be transmitted from the rotating assembly of a vacuum pump, e.g. the rotor shaft of a turbomolecular pump, into the static structure of the vacuum pump and/or neighbouring systems. Thus, instrumentation in the vacuum space created by the vacuum pump, or close to it, are is compromised. More specifically, the damper is arranged such that it is axially relatively more flexible and radially relatively less flexible.

In embodiments, the rotor bearing damper may be configured to dissipate one or more vibration frequencies that may be transmitted from the rotating assembly of the vacuum pump, the one or more vibration frequencies being at a frequency of 10kHz or greater.

In embodiments, the rotor bearing damper may be configured to dissipate one or more vibration frequencies at a frequency in the range of from around 10 kHz to around 110 kHz, preferably from around 20 kHz to around 110 kHz, more preferably from around 40 kHz to around 110 kHz, still more preferably from around 75 kHz to around 110 kHz.

In embodiments, the rotor bearing damper may be arranged to dissipate one or more vibration frequencies at a frequency of around 110 kHz or greater.

Thus, transmission of vibrations at these frequencies will not transmit beyond the rotor bearing damper, or transmission will at least be dissipated to a permissible level.

In embodiments, the resilient bearing support may comprise a compact metal spring damper (CMSD).

In embodiments, the rotor shaft may be rotatable about a rotational axis thereof, and the radially outwardly extending rotor bearing damper may be arranged such that it is relatively more flexible in a plane substantially parallel to said rotational axis and relatively less flexible in a plane substantially perpendicular to said rotational axis.

According to the invention, the resilient bearing support is relatively more flexible in a plane substantially perpendicular to said rotational axis and substantially less flexible in a plane substantially parallel to said rotational axis.

According to the invention, the radially outwardly extending rotor bearing damper comprises an inner fixture coupled to the bearing arrangement, and an outer fixture coupled to the pump housing, and a flexure extending radially outwardly from the inner fixture to the outer fixture. In embodiments, the outer fixture is substantially fixedly attached to the housing and the inner fixture is moveable relative thereto.

In embodiments of any suitable preceding aspect, the rotor bearing damper may comprise more than one flexure.

In embodiments of any suitable preceding aspect, the inner fixture and outer fixture may be releasably connected to the bearing arrangement and pump housing, respectively. In alternative embodiments of any suitable preceding aspect, the inner fixture and outer fixture may be permanently, i.e. non-releasably, connected to the bearing arrangement and pump housing, respectively.

In embodiments of any suitable preceding aspect, the flexure may be substantially annular. In embodiments of any suitable preceding aspect, the flexure may be part-annular. In embodiments of any suitable preceding aspect, the flexure may have a substantially circular cross-section in a plane substantially perpendicular to the rotational axis of the vacuum pump.

In embodiments of any suitable preceding aspect, the outer fixture may be substantially embedded in a wall of the pump housing.

In embodiments of any suitable preceding aspect, the rotor bearing damper may have a substantially H-shaped cross-section.

In embodiments of any suitable preceding aspect, the inner fixture may be substantially greater in size than the outer fixture. In embodiments, the inner fixture may be sized such that it substantially envelopes the bearing arrangement of the vacuum pump. Therefore, the rotor bearing damper may absorb vibrations which are transmitted from any part of the bearing arrangement.

In embodiments of any suitable preceding aspect, at least one of the inner and outer fixtures may be substantially elongate and may extend substantially perpendicularly to the flexure. In embodiments, both the inner and outer fixtures may be substantially tubular and may extend in length substantially perpendicularly to the flexure.

In embodiments of any suitable preceding aspect, a bearing may include a bearing cage having an inner race, an outer race and a plurality of rolling elements operatively engaged between said inner race and outer race. In embodiments, the inner fixture may be coupled to the outer race of the bearing. In embodiments, the inner fixture may be coupled to the outer race substantially about the circumference thereof. Thus, a vacuum pump may comprise the rotor bearing damper in place of a resilient bearing support.

In embodiments of any suitable preceding aspect, the resilient bearing support may comprise a compact metal spring damper (CMSD). In embodiments, the CMSD may comprise an inner portion coupled to the bearing and an outer portion, wherein the inner and outer portions are connected by at least one resiliently flexible member, wherein the bearing support is coupled to the housing by a radially outwardly extending rotor bearing damper.

In embodiments of any suitable preceding aspect, the bearing arrangement may be devoid of any additional bearing supports. For example, in embodiments, the bearing arrangement may be devoid of a ring lock or the like. Therefore, the rotor bearing damper may act substantially alone to secure the bearing arrangement between the rotor shaft and pump housing.

In embodiments of any suitable preceding aspect, the (or each) flexure may be tailored in its axial depth (i.e. thickness), shape, density, form, materials or similar in order to tailor the damping response of the rotor bearing damper in order to suppress specific undesired vibration frequencies or amplitudes.

In embodiments of any suitable preceding aspect, the flexure may comprise two or more portions having different axial depths. In other words, the flexure may have two or more portions having different thicknesses. That is to say, the thickness may vary, for example increasing or decreasing in a radially outward direction. The increase may uniform or non-uniform. Thus, the configuration of the or each flexure may alter the damping response provided by the rotor bearing damper, so that the damping response may be tailored to target particular transmitted vibration frequencies and/or amplitudes.

In embodiments of any suitable preceding aspect, the flexure may comprise a portion configured to provide the rotor bearing damper with a mass damping effect. In embodiments, the mass damping portion may of greater thickness and/or greater density than the remainder of the flexure. In embodiments, the flexure may comprise a portion which is substantially equidistant from the inner fixture and outer fixture and which has a substantially greater mass than an adjacent portion of the flexure and which is arranged to provide a mass damping effect. In embodiments, the flexure comprises a portion which has a substantially greater axial depth than the inner fixture and outer fixture. Thus, a portion of the flexure may extend substantially above and below the inner fixture and outer fixture to provide a mass damping effect. In embodiments, the portion may be configured to vary the axial flexibility of the rotor bearing damper. Therefore, different flexibility profiles may be further configured by altering the presence or features of a mass damping portion.

In embodiments of any suitable preceding aspect, the flexure may have a substantially uniform axial depth, i.e. thickness.

In embodiments of any suitable preceding aspect, two said portions of different axial depth of the flexure may be substantially equidistant from the inner and outer couplers. In embodiments, a first portion having a first axial depth may be closer to one of the inner fixture and outer fixture than a second portion having a second axial depth which is different to said first section.

In embodiments of any suitable preceding aspect, the flexure may taper in axial depth between the inner and outer fixtures. For example, in embodiments, the flexure may be 'thickest' towards the inner fixture and 'thinnest' towards the outer fixture, the flexure tapering between the inner and outer fixtures. In embodiments, the flexure is 'thinnest', i.e. has a lesser axial depth, at a central region thereof, and portions of the flexure proximal to the inner and outer fixtures are thicker, i.e. are of greater axial depth, than the central region.

In embodiments of any suitable preceding aspect, the flexure may have a substantially annular transverse cross section in a plane substantially perpendicular to the rotational axis of the rotor shaft, and two or more portions of said section may have different axial depths.

In embodiments of any suitable preceding aspect, the rotor bearing damper may comprise one or more perforations. In embodiments, the rotor bearing damper comprises more than one flexure and a said perforation may substantially separate adjacent flexures of the rotor bearing damper.

In embodiments of any suitable preceding aspect, a perforation may substantially form a gas-filled space.

In embodiments of any suitable preceding aspect, the rotor bearing damper may be devoid of perforations or the like. In other words, in embodiments, the rotor bearing damper may be substantially continuous in its form, and in particular the rotor bearing damper may comprise a single substantially continuous flexure.

In embodiments of any suitable preceding aspect, the rotor bearing damper may comprise a plurality of flexures which extend radially outwardly from the inner fixture to the outer fixture. In embodiments, the rotor bearing damper may comprise a plurality of perforations separating adjacent flexures. In embodiments, the rotor bearing damper may comprise two, three, four or more part-annular flexures. In embodiments, the rotor bearing damper may comprise a plurality of flexures which are substantially evenly spaced about the circumference thereof.

In embodiments, a flexure may extend between the inner fixture and outer fixture without contacting one or both of the inner fixture and outer fixture. In other words, a perforation or a portion of a perforation may be provided between a flexure and each or both of the inner fixture and outer fixture.

In embodiments, a second material may be arranged substantially as a bridge between a flexure and the or each of the inner fixture and outer fixture and between adjacent flexures.

In embodiments of any suitable preceding aspect, a said flexure may be formed of a first material, the rotor bearing damper may comprise one or more perforations, and at least one said perforation may be substantially filled with a second material. Therefore, the rotor bearing damper may be a multi-material, or 'hybrid composition', rotor bearing damper, i.e. being formed of more than one material. For example, in embodiments, the flexure may be formed of a metal, for example a metal sheet or foil, and at least one perforation may be filled with a polymer foam.

In embodiments where a perforation or a portion of a perforation is provided between adjacent flexures and/or one of or both of the inner fixture and outer fixture, the perforation may be substantially filled with a material which is configured to act as a bridge between the inner fixture, outer fixture and flexure.

In embodiments of any suitable preceding aspect, a perforation may be filled such that the filled perforation has substantially the same axial depth as the flexure or flexures.

In embodiments, a perforation may be filled such that the filled perforation has a substantially greater axial depth than the flexure or flexures. In embodiments, the rotor bearing damper may be coated by a material which is not the same material from which the inner fixture, outer fixture, and flexure(s) are formed, wherein the coating material fills one or more said perforations.

In embodiments of any suitable preceding aspect, the rotor bearing damper may be substantially integrally formed.

As used herein, the term "integrally formed" refers to the rotor bearing damper being made of a single piece or being formed into a single piece.

In embodiments of any suitable preceding aspect, the rotor bearing damper may be at least partially additively manufactured. In embodiments, the rotor bearing damper may be entirely formed by an additive manufacturing process. For example, in embodiments, the rotor bearing damper may be three-dimensionally (3D) printed.

In embodiments of any suitable preceding aspect, the rotor bearing damper may be at least partially formed of a polymer (an elastomer, for example), a metal, or a composite thereof. In embodiments, the rotor bearing damper may be at least partially formed of an elastomer. In embodiments, the rotor bearing damper may be at least partially formed of a metal. For example, in embodiments, the inner fixture and outer fixture may be formed of a metal sheet; the flexure may be formed of a metal sheet, and the rotor bearing damper may have a plurality of perforations; and each perforation may be filled with a polymer.

In embodiments of any suitable preceding aspect, the rotor bearing damper may be at least partially coated. In embodiments, the rotor bearing damper may be coated with a polymer. For example, in embodiments, the inner fixture, outer fixture and flexure may be metallic, and the metallic inner fixture, outer fixture and flexure may be coated in a polymer. In other words, the damper may be overmolded. For example, the inner fixture, outer fixture and the or each flexure of the rotor bearing damper may be formed of a metal material and the inner fixture, outer fixture and the or each flexure may be overmolded with a polymer to provide a multi-material rotor bearing damper. Thus, the rotor bearing damper may be more specifically tailored in its construction and configuration in order to provide an improved response to targeted vibration frequencies.

In embodiments of any suitable preceding aspect, the vacuum pump may be a turbomolecular pump. In embodiments, the turbomolecular pump may have two bearing arrangements located at or intermediate respective ends of the rotor shaft. In embodiments, one or both bearing arrangements may comprise a mechanical bearing in the form of a rolling bearing. For example, in embodiments, a first bearing may be in the form of a magnetic bearing, and a second bearing may be in the form of a rolling bearing. In embodiments, a rotor bearing damper is provided at each mechanical bearing of the turbomolecular pump.

In a further aspect, the present invention provides a method of designing a rotor bearing damper for a vacuum pump comprising a housing and a rotor shaft having a rotational axis and being supported by a rotor bearing, the rotor bearing damper having an inner fixture configured to couple to the rotor bearing; an outer fixture arranged radially outward of the inner fixture and configured to couple to the housing, and a flexure extending radially outwardly from the inner fixture to the outer fixture comprising the steps of:
a) determining one or more vibration characteristics to be dampened;
b) forming the inner fixture and the outer fixture; and
c) configuring the flexure such that it is relatively less flexible in a radial plane and relatively more flexible in a direction substantially perpendicular to said radial plane such that the one or more determined vibration characteristics are substantially dampened, in use.

In embodiments, a vibration characteristic may be a frequency and/or amplitude and/or resonance.

In a further aspect, the present invention provides a method of manufacturing a rotor bearing damper according to any preceding aspect.

In embodiments, the method may comprise the step of forming the rotor bearing damper at least partially using an additive manufacturing process. In embodiments, the method may comprise the step of entirely forming the rotor bearing damper from an additive manufacturing process.

In embodiments, the method may comprise the step of forming the rotor bearing damper at least partially using a three-dimensional (3D) printing process. In embodiments, the method may comprise the step of entirely forming the rotor bearing damper from three-dimensional (3D) printing process.

### Brief Description of Figures

Preferred features of the present invention will now be described, by way of example, with reference to the accompanying drawings, in which:
Figure 1 shows a prior art bearing arrangement in situ in a turbomolecular pump.
Figure 2 shows a cross-sectional view of part of a vacuum pump according to the present invention.
Figures 3a and 3b show cross-sectional views of rotor bearing dampers according to the present invention.
Figure 4 shows a cross-sectional view of a rotor bearing damper according to the present invention comprising an axially extending member.
Figures 5a to 5d show transverse cross-sectional views of rotor bearing dampers according to the present invention.

### Detailed Description

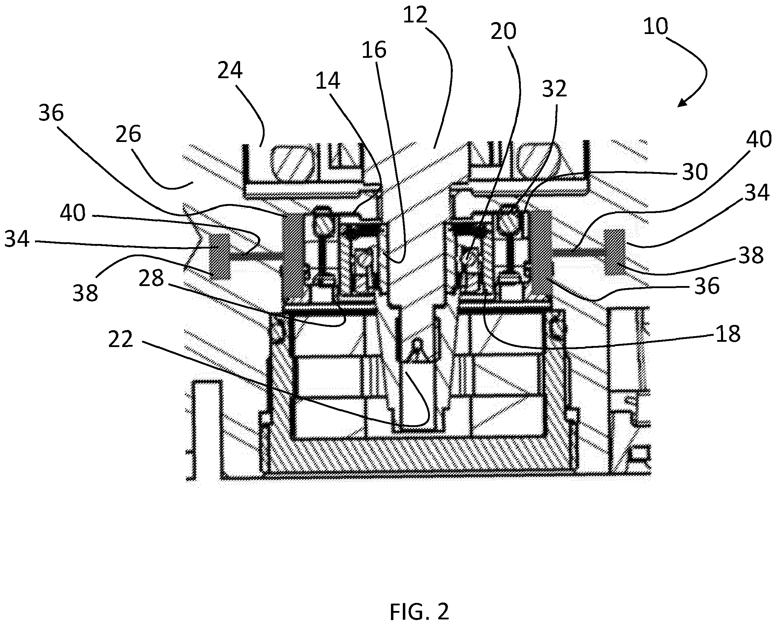

The invention provides a rotor bearing damper for a bearing arrangement in a vacuum pump, for example a turbomolecular vacuum pump. Figure 2 shows part of a turbomolecular pump which may be arranged as part of a pump system wherein the turbomolecular pump is fluidly connected to a further pump, for example a rotary pump, at its exhaust.

Figure 2 shows a part of a turbomolecular pump 10 having a rotor shaft 12 and a bearing arrangement 14 in the form of a rolling bearing having an inner race 16, an outer race 18 and a plurality of rolling elements 20 in the form of ball bearings. The bearing arrangement 14 is formed of a polymer.

A lubricant reservoir 22 is arranged to contain a lubricant which, in use, is wicked by centrifugal forces generated by rotation of the shaft 12 into the bearing 14 to lubricate the bearing 14. In use, lubricant drains from the bearing 14, under gravity, back into the reservoir 22.

The pump 10 further comprises a pump housing 24 defined by a chamber wall 26. The chamber wall 26 is formed of aluminium. The shaft 12 is formed of steel. The chamber has an inner diameter of around 150 mm.

The bearing arrangement 14 further comprises a resilient bearing support in the form of a compact metal spring damper (CMSD) which has an inner portion 28, an outer portion 30 and an O-ring 32. The CMSD substantially surrounds an end portion of the shaft 12.

The pump 10 further comprises a rotor bearing damper 34. The rotor bearing damper 34 has an inner fixture 36 and an outer fixture 38. The rotor bearing damper 34 further comprises a flexure 40 which substantially radially, i.e. outwardly, extends between and is integrally formed with the inner fixture 36 and outer fixture 38. The rotor bearing damper 34 is located between the bearing arrangement 14 and the pump housing 24. The rotor bearing damper 34 is annular and a cross section of the damper 34 in a plane substantially parallel to the rotational axis of the shaft 12 is substantially H-shaped.

The vacuum pump 10 of Figure 2 is substantially vertically arranged. The inner fixture 36 and outer fixture 38 are each formed as an elongate ring which substantially surrounds the bearing arrangement 14. The flexure 40 is formed as a substantially planar diaphragm which extends between the inner fixture 36 and outer fixture 38. The flexure 40 extends around substantially the entire circumference of the bearing arrangement 14.

The substantially radially extending flexure 40 is arranged such that the rotor bearing damper 34 is axially relatively more flexible and radially relatively less flexible, i.e. stiff. Thus, the rotor bearing damper 34 substantially prevents the shaft 12 from moving radially, from side-to-side whilst allowing a level of movement in the axial direction.

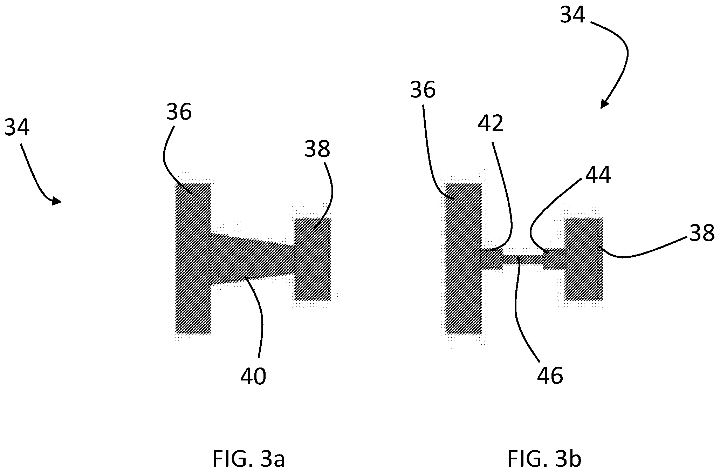

The rotor bearing damper 34, and in particular the flexure 40, may be formed such that the rotor bearing damper 34 is tailored to target and suppress particular vibration frequencies and/or amplitudes. Cross-sections of parts of two examples of rotor bearing dampers 34 are shown in figures 3a and 3b.

As shown in figures 3a and 3b, the rotor bearing damper 34 has an inner fixture 36 and an outer fixture 38 and a flexure 40. The inner fixture 36 and outer fixture 38 have substantially similar widths. The inner fixture 36 is substantially greater in size than the outer fixture 38. The inner fixture 36 and the outer fixture 38 are oblong. The flexure 40 in Figure 3a has a non-uniform axial depth. In other words, the flexure 40 has a non-uniform thickness. The axial depth of the flexure 40 is greater towards the inner fixture 36 than towards the outer fixture 38.

In the rotor bearing damper of Figure 3b, the flexure 40 also has a non-uniform axial depth. The flexure 40 has three portions: first and second portions 42, 44 have the same or similar axial depths and are located at or near the inner fixture 36 and outer fixture 38, respectively. A third portion 46 has a smaller axial depth than the first and second portions 42, 44 and is located towards a central region of the flexure 40. The rotor bearing damper 34, and in particular the flexure 40, may thus be customised for targeting particular vibration frequencies and/or amplitudes.

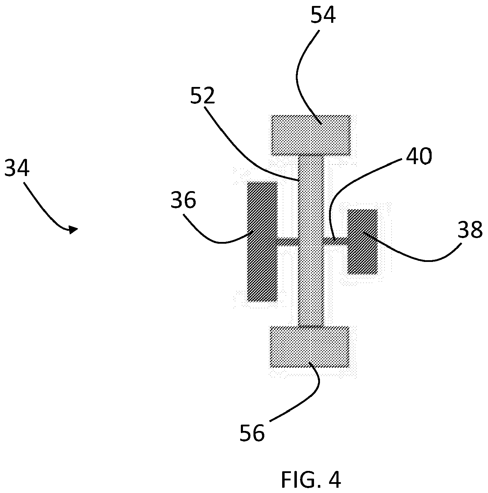

Referring to Figure 4, a rotor bearing damper 34 comprises a flexure 40 having a mass damping portion 52 having an axial depth suitable to provide the rotor bearing damper 34 with a mass damping effect. The mass damping portion 52 is substantially equidistant from the inner fixture 36 and outer fixture 38. The mass damping portion 52 has a substantially greater mass than adjacent portions 42, 44 of the flexure 40. The mass damping portion 52 has a substantially greater axial depth than the inner fixture 36 and outer fixture 38. The mass damping portion 52 of the flexure 40 extends above and below the inner fixture 36 and outer fixture 38. The mass damping portion 52 has auxiliary fixtures 54, 56 at its respective ends which are configured to be coupled to a part of a vacuum pump. The mass damping portion 54 is configured to vary the axial flexibility of the rotor bearing damper 34.

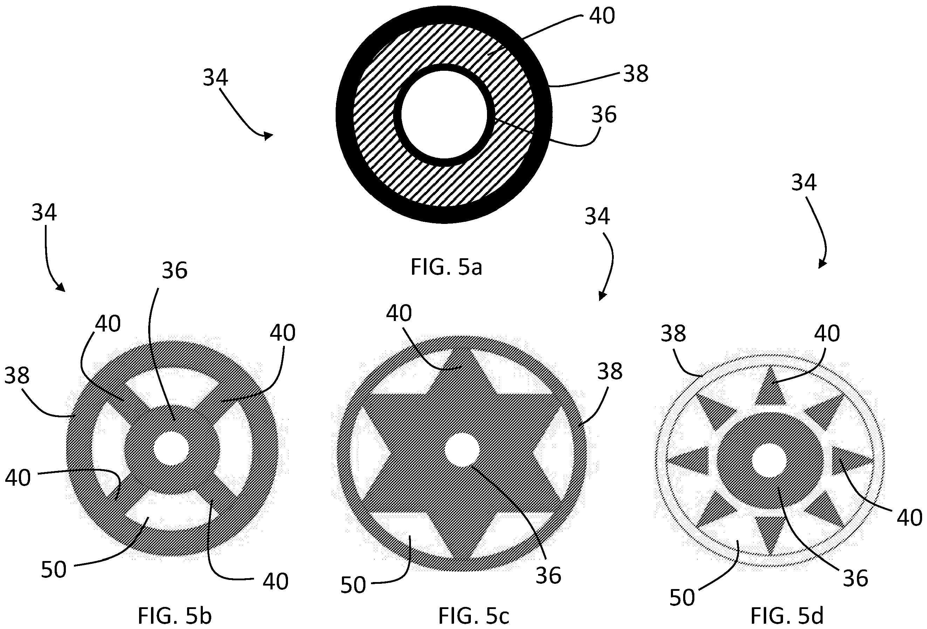

Figures 5a to 5d show transverse radial cross sections of several rotor bearing dampers 34 according to the invention. Each rotor bearing damper 34 comprises an inner fixture 36, an outer fixture 38 and at least one substantially radially extending flexure 40 which extends radially outwardly from the inner fixture 36 to the outer fixture 38.

The rotor bearing damper 34 of Figure 5a comprises a flexure 40 which is continuous in form, i.e. the rotor bearing damper 34 does not comprise any perforations or the like.

The rotor bearing damper 34 of Figure 5b comprises four flexures 40. Each flexure is part-annular and extends between the inner fixture 36 and outer fixture 38. Four perforations 50 separate adjacent flexures 40.

The rotor bearing damper 34 of Figure 5c comprises an inner fixture 36 which is formed by an inwardly facing surface which, in use, surrounds a bearing arrangement (not shown), and an outer fixture 38. The flexure 40 extends radially outwardly from the inner fixture 36 formed by the inwardly facing surface, and the outer fixture 38.. A plurality of perforations 50 are located between the flexure 40 and the outer fixture 38.

The rotor bearing damper 34 of Figure 5d comprises a plurality of flexures 40. Adjacent flexures 40 are separated by perforations 50. The perforations 50 also separate the inner fixture 36 from the flexures 40. In the embodiment of Figure 4d, the perforations are filled with a material configured such that the material forms a link between the inner fixture 36 and each of the flexures 40. For example, the inner fixture 36, outer fixture 38 and flexures 40 may be formed of a metal foil, and the perforations are filled with a polymer.

### Reference Key

- 10: Turbomolecular pump
- 12: Rotor shaft
- 14: Bearing arrangement
- 16: Inner race
- 18: Outer race
- 20: Rolling elements
- 22: Lubricant reservoir
- 24: Pump housing
- 26: Chamber wall
- 28: CMSD inner portion
- 30: CMSD outer portion
- 32: CMSD O-ring
- 34: Rotor bearing damper
- 36: Inner fixture
- 38: Outer fixture
- 40: Flexure
- 42: First flexure portion
- 44: Second flexure portion
- 46: Third flexure portion
- 50: Perforation
- 52: Mass damping portion
- 54: First end portion of mass damping portion
- 56: Second end portion of mass damping portion

## Claims

1. A rotor bearing damper (34) for a vacuum pump comprising a housing (24) and a rotor shaft (12) having a rotational axis and being supported by a rotor bearing (14), the rotor bearing damper being coupled to a resilient bearing support of a bearing arrangement and comprising:
an inner fixture (36) configured to couple to the rotor bearing via the resilient bearing support of the bearing arrangement,
an outer fixture (38) arranged radially outward of the inner fixture and configured to couple to the housing, and
a flexure (40) extending radially outwardly from the inner fixture to the outer fixture;
wherein the flexure is relatively less flexible in a radial plane and relatively more flexible in a direction substantially perpendicular to said radial plane; and
wherein the resilient bearing support is relatively more flexible in a radial plane and relatively less flexible in a direction substantially perpendicular to said radial plane.

2. The rotor bearing damper (34) according to claim 1, wherein the resilient bearing support comprises an inner portion coupled to the bearing and an outer portion, wherein the inner and outer portions are connected by at least one resiliently flexible member, and wherein the resilient bearing support is coupled to the housing of the vacuum pump by the rotor bearing damper.

3. The rotor bearing damper according to claim 1 or 2, wherein the resilient bearing support comprises a compact metal spring damper

4. A vacuum pump (10) including a pump housing (24) and a pump mechanism located within said pump housing, the pump mechanism comprising a rotor shaft (12) which is rotatable about a rotational axis thereof, and at least one bearing arrangement (14),
wherein the at least one bearing arrangement comprises a bearing coupled to the rotor shaft and a resilient bearing support, the resilient bearing support comprising an inner portion (28) coupled to the bearing and an outer portion (30) coupled to the pump housing, wherein the inner and outer portions are connected by at least one resiliently flexible member (32), the resilient bearing support being relatively more flexible in a plane substantially perpendicular to said rotational axis and substantially less flexible in a plane substantially parallel to said rotational axis; and
wherein the outer portion (30) of the resilient bearing support is coupled to the pump housing by a radially outwardly extending rotor bearing damper (34) according to claim 1.

5. A vacuum pump according to claim 4, the radially outwardly extending rotor bearing damper (34) comprising an inner fixture (36) coupled to the bearing arrangement, and an outer fixture (38) coupled to the pump housing (24), and a flexure (40) extending radially outwardly from the inner fixture (36) to the outer fixture (38); wherein the outer fixture is substantially fixedly attached to the housing and the inner fixture is moveable relative thereto.

6. The vacuum pump according to claim 5, wherein the resilient bearing support comprises a compact metal spring damper.

7. The rotor bearing damper of any of claims 1 to 3 or the vacuum pump of any of claims 4 to 6, wherein the flexure (40) comprises two or more portions (42,44, 46) having different axial depths.

8. The rotor bearing damper of any of claims 1 to 3, or 7 or the vacuum pump of any of claims 4 to 6, wherein the flexure (40) comprises a mass damping portion (52) which has an axial depth which is substantially equal to or greater than at least one of the inner fixture (36) and outer fixture (38).

9. The rotor bearing damper according to claim 8, or vacuum pump according to claim 8, wherein the mass damping portion (52) has a greater thickness and/or greater density than the remainder of the flexure.

10. The rotor bearing damper of any of claims 1 to 3 or 7 to 9 or the vacuum pump of any of claims 4 to 6, wherein the flexure (40) comprises one or more perforations (50), preferably wherein the flexure is formed of a first material, and at least one said perforation is substantially filled with a second material.

11. The rotor bearing damper of any of claims 1 to 3 or 7 to 10, or the vacuum pump of any of claims 4 to 6, wherein the rotor bearing damper has a substantially H-shaped cross-section.

12. The rotor bearing damper of any of claims 1 to 3 or 7 to 11, or the vacuum pump of any of claims 4 to 6, wherein the inner fixture is substantially greater in size than the outer fixture.

13. The rotor bearing damper of any of claims 1 to 3 or 7 to 12 or the vacuum pump of any of claims 4 to 6, being substantially integrally formed, and preferably being at least partially additively manufactured.

14. The rotor bearing damper of any of claims 1 to 3 or 7 to 13, wherein the rotor bearing damper is located in a turbomolecular vacuum pump, or the vacuum pump of any of claims 4 to 6, wherein the vacuum pump is a turbomolecular vacuum pump.

## Patentansprüche

1. Rotorlagerdämpfer (34) für eine Vakuumpumpe, umfassend ein Gehäuse (24) und eine Rotorwelle (12), die eine Rotationsachse aufweist und durch ein Rotorlager (14) abgestützt wird, wobei der Rotorlagerdämpfer an eine elastische Lagerabstützung einer Lageranordnung gekoppelt ist und umfasst:
eine innere Befestigung (36), dazu konfiguriert, über die elastische Lagerabstützung der Lageranordnung an das Rotorlager gekoppelt zu werden,
eine äußere Befestigung (38), radial außerhalb der inneren Befestigung angeordnet und dazu konfiguriert, an das Gehäuse gekoppelt zu werden, und
ein Verformungselement (40), das sich von der inneren Befestigung radial nach außen zur äußeren Befestigung erstreckt;
wobei das Verformungselement in einer radialen Ebene relativ weniger flexibel und in einer Richtung im Wesentlichen senkrecht zu der radialen Ebene relativ mehr flexibel ist; und
wobei die elastische Lagerabstützung in einer radialen Ebene relativ mehr flexibel und in einer Richtung im Wesentlichen senkrecht zu der radialen Ebene relativ weniger flexibel ist.

2. Rotorlagerdämpfer (34) nach Anspruch 1, wobei die elastische Lagerabstützung einen an das Lager gekoppelten inneren Abschnitt und einen äußeren Abschnitt umfasst, wobei der innere und der äußere Abschnitt durch mindestens ein elastisch flexibles Element verbunden sind, und wobei die elastische Lagerabstützung durch den Rotorlagerdämpfer an das Gehäuse der Vakuumpumpe gekoppelt ist.

3. Rotorlagerdämpfer nach Anspruch 1 oder 2, wobei die elastische Lagerabstützung einen kompakten Metallfederdämpfer umfasst.

4. Vakuumpumpe (10), beinhaltend ein Pumpengehäuse (24) und einen in dem Pumpengehäuse angeordneten Pumpenmechanismus, wobei der Pumpenmechanismus eine Rotorwelle (12), die um eine Rotationsachse davon drehbar ist, und mindestens eine Lageranordnung (14) umfasst,
wobei die mindestens eine Lageranordnung ein an die Rotorwelle gekoppeltes Lager und eine elastische Lagerabstützung umfasst, wobei die elastische Lagerabstützung einen an das Lager gekoppelten inneren Abschnitt (28) und einen an das Pumpengehäuse gekoppelten äußeren Abschnitt (30) umfasst, wobei der innere und der äußere Abschnitt durch mindestens ein elastisch flexibles Element (32) verbunden sind, wobei die elastische Lagerabstützung in einer Ebene, die im Wesentlichen senkrecht zur Rotationsachse ist, relativ flexibler und in einer Ebene, die im Wesentlichen parallel zur Rotationsachse ist, wesentlich weniger flexibel ist; und
wobei der äußere Abschnitt (30) der elastischen Lagerabstützung durch einen sich radial nach außen erstreckenden Rotorlagerdämpfer (34) nach Anspruch 1 an das Pumpengehäuse gekoppelt ist.

5. Vakuumpumpe nach Anspruch 4, wobei der sich radial nach außen erstreckende Rotorlagerdämpfer (34) eine innere Befestigung (36), gekoppelt mit der Lageranordnung, und eine äußere Befestigung (38), gekoppelt mit dem Pumpengehäuse (24), und ein sich von der inneren Befestigung (36) zur äußeren Befestigung (38) radial nach außen erstreckendes Verformungselement (40) umfasst; wobei die äußere Befestigung im Wesentlichen starr an dem Gehäuse angebracht ist und die innere Befestigung relativ dazu bewegbar ist.

6. Vakuumpumpe nach Anspruch 5, wobei die elastische Lagerabstützung einen kompakten Metallfederdämpfer umfasst.

7. Rotorlagerdämpfer nach einem der Ansprüche 1 bis 3 oder Vakuumpumpe nach einem der Ansprüche 4 bis 6, wobei das Verformungselement (40) zwei oder mehr Abschnitte (42, 44, 46) mit unterschiedlichen axialen Tiefen umfasst.

8. Rotorlagerdämpfer nach einem der Ansprüche 1 bis 3 oder 7 oder Vakuumpumpe nach einem der Ansprüche 4 bis 6, wobei das Verformungselement (40) einen Massendämpfungsabschnitt (52) umfasst, der eine axiale Tiefe aufweist, die im Wesentlichen gleich groß wie oder größer als mindestens eine von der inneren Befestigung (36) und der äußeren Befestigung (38) ist.

9. Rotorlagerdämpfer nach Anspruch 8 oder Vakuumpumpe nach Anspruch 8, wobei der Massendämpfungsabschnitt (52) eine größere Dicke und/oder eine größere Dichte als der Rest des Verformungselements aufweist.

10. Rotorlagerdämpfer nach einem der Ansprüche 1 bis 3 oder 7 bis 9 oder Vakuumpumpe nach einem der Ansprüche 4 bis 6, wobei das Verformungselement (40) eine oder mehrere Perforationen (50) umfasst, wobei das Verformungselement vorzugsweise aus einem ersten Material gebildet ist und mindestens eine Perforation im Wesentlichen mit einem zweiten Material gefüllt ist.

11. Rotorlagerdämpfer nach einem der Ansprüche 1 bis 3 oder 7 bis 10 oder Vakuumpumpe nach einem der Ansprüche 4 bis 6, wobei der Rotorlagerdämpfer einen im Wesentlichen H-förmigen Querschnitt aufweist.

12. Rotorlagerdämpfer nach einem der Ansprüche 1 bis 3 oder 7 bis 11 oder Vakuumpumpe nach einem der Ansprüche 4 bis 6, wobei die innere Befestigung wesentlich größer als die äußere Befestigung ist.

13. Rotorlagerdämpfer nach einem der Ansprüche 1 bis 3 oder 7 bis 12 oder Vakuumpumpe nach einem der Ansprüche 4 bis 6, im Wesentlichen einstückig ausgebildet und vorzugsweise mindestens teilweise additiv gefertigt.

14. Rotorlagerdämpfer nach einem der Ansprüche 1 bis 3 oder 7 bis 13, wobei sich der Rotorlagerdämpfer in einer Turbomolekular-Vakuumpumpe befindet, oder Vakuumpumpe nach einem der Ansprüche 4 bis 6, wobei die Vakuumpumpe eine Turbomolekular-Vakuumpumpe ist.

## Revendications

1. Amortisseur de palier de rotor (34) pour une pompe à vide comprenant un carter (24) et un arbre de rotor (12) ayant un axe de rotation et étant supporté par un palier de rotor (14), l'amortisseur de palier de rotor étant couplé à un support de palier élastique d'un agencement de palier et comprenant:
une fixation interne (36) configurée pour se coupler au palier de rotor via le support de palier élastique de l'agencement de palier,
une fixation externe (38) disposée radialement à l'extérieur de la fixation interne et configurée pour se coupler au carter, et
un élément flexible (40) s'étendant radialement vers l'extérieur de la fixation interne à la fixation externe;
dans lequel l'élément flexible est relativement moins flexible dans un plan radial et relativement plus flexible dans une direction sensiblement perpendiculaire audit plan radial; et
dans lequel le support de palier élastique est relativement plus flexible dans un plan radial et relativement moins flexible dans une direction sensiblement perpendiculaire audit plan radial.

2. Amortisseur de palier de rotor (34) selon la revendication 1, dans lequel le support de palier élastique comprend une partie interne couplée au palier et une partie externe, dans lequel les parties interne et externe sont reliées par au moins un élément élastiquement flexible, et dans lequel le support de palier élastique est couplé au carter de la pompe à vide par l'amortisseur de palier de rotor.

3. Amortisseur de palier de rotor selon la revendication 1 ou 2, dans lequel le support de palier élastique comprend un amortisseur à ressort métallique compact.

4. Pompe à vide (10) incluant un carter de pompe (24) et un mécanisme de pompe situé à l'intérieur dudit carter de pompe, le mécanisme de pompe comprenant un arbre de rotor (12) qui peut tourner autour d'un axe de rotation de celui-ci, et au moins un agencement de palier (14),
dans laquelle le au moins un agencements de palier comprend un palier couplé à l'arbre de rotor et un support de palier élastique, le support de palier élastique comprenant une partie interne (28) couplée au palier et une partie externe (30) couplée au carter de pompe, dans laquelle les parties interne et externe sont reliées par au moins un élément élastiquement flexible (32), le support de palier élastique étant relativement plus flexible dans un plan sensiblement perpendiculaire audit axe de rotation et sensiblement moins flexible dans un plan sensiblement parallèle audit axe de rotation; et
dans laquelle la partie externe (30) du support de palier élastique est couplée au carter de pompe par un amortisseur de palier de rotor s'étendant radialement vers l'extérieur (34) selon la revendication 1.

5. Pompe à vide selon la revendication 4, l'amortisseur de palier de rotor s'étendant radialement vers l'extérieur (34) comprenant une fixation interne (36) couplée à l'agencement de palier, et une fixation externe (38) couplée au carter de pompe (24), et un élément flexible (40) s'étendant radialement vers l'extérieur de la fixation interne (36) à la fixation externe (38); dans laquelle la fixation externe est fixée de manière sensiblement fixe au carter et la fixation interne est mobile par rapport à celui-ci.

6. Pompe à vide selon la revendication 5, dans laquelle le support de palier élastique comprend un amortisseur à ressort métallique compact.

7. Amortisseur de palier de rotor selon l'une quelconque des revendications 1 à 3 ou pompe à vide selon l'une quelconque des revendications 4 à 6, dans lequel l'élément flexible (40) comprend deux ou plusieurs parties (42, 44, 46) ayant des profondeurs axiales différentes.

8. Amortisseur de palier de rotor selon l'une quelconque des revendications 1 à 3, ou 7 ou pompe à vide selon l'une quelconque des revendications 4 à 6, dans lequel l'élément flexible (40) comprend une partie d'amortissement de masse (52) qui a une profondeur axiale qui est sensiblement égale ou supérieure à au moins l'une de la fixation interne (36) et de la fixation externe (38).

9. Amortisseur de palier de rotor selon la revendication 8, ou pompe à vide selon la revendication 8, dans lequel la partie d'amortissement de masse (52) a une épaisseur plus grande et/ou une densité plus grande que le reste de l'élément flexible.

10. Amortisseur de palier de rotor selon l'une quelconque des revendications 1 à 3 ou 7 à 9 ou pompe à vide selon l'une quelconque des revendications 4 à 6, dans lequel l'élément flexible (40) comprend une ou plusieurs perforations (50), de préférence dans lequel l'élément flexible est formé d'un premier matériau, et au moins l'une desdites perforations est sensiblement remplie d'un second matériau.

11. Amortisseur de palier de rotor selon l'une quelconque des revendications 1 à 3 ou 7 à 10, ou pompe à vide selon l'une quelconque des revendications 4 à 6, dans lequel l'amortisseur de palier de rotor a une section transversale sensiblement en forme de H.

12. Amortisseur de palier de rotor selon l'une quelconque des revendications 1 à 3 ou 7 à 11, ou pompe à vide selon l'une quelconque des revendications 4 à 6, dans lequel la fixation interne est sensiblement plus grande en taille que la fixation externe.

13. Amortisseur de palier de rotor selon l'une quelconque des revendications 1 à 3 ou 7 à 12 ou pompe à vide selon l'une quelconque des revendications 4 à 6, étant formé de manière sensiblement intégrale, et étant de préférence au moins partiellement fabriqué de manière additive.

14. Amortisseur de palier de rotor selon l'une quelconque des revendications 1 à 3 ou 7 à 13, dans lequel l'amortisseur de palier de rotor est situé dans une pompe à vide turbomoléculaire, ou pompe à vide selon l'une quelconque des revendications 4 à 6, dans laquelle la pompe à vide est une pompe à vide turbomoléculaire.
